# EUROPEAN PATENT SPECIFICATION

(11) **EP 4 578 636 B1**
(45) Date of publication and mention of the grant of the patent: **09.09.2026**
(21) Application number: 24223249.4
(22) Date of filing: 24.12.2024
(51) Int. Cl.: B29C 65/36, B29C 65/46, B29C 65/48, B29C 65/82, E04D 5/14, E04D 5/10, B32B 27/12, B29L 31/10

(54) **METHOD OF INDUCTION WELDING USING ROOFING MEMBRANES WITH A SCRIM OF LOW DENSITY AND ROOFING ASSEMBLY SYSTEM**
INDUKTIONSSCHWEISSVERFAHREN UNTER VERWENDUNG VON DACHBAHNEN MIT EINEM GITTERSTOFF NIEDRIGER DICHTE UND DACHMONTAGESYSTEM
PROCÉDÉ DE SOUDAGE PAR INDUCTION UTILISANT DES MEMBRANES DE TOITURE AVEC UNE GRILLE DE FAIBLE DENSITÉ ET SYSTÈME D'ASSEMBLAGE DE TOITURE

(30) Priority: 27.12.2023 US 202363615050 P; 16.12.2024 US 202418983043
(43) Date of publication of application: 02.07.2025
(73) Proprietor: Carlisle Construction Materials, LLC, Carlisle, PA 17013 (US)
(72) Inventor: ZHANG, Xuan, Carlisle 17013 (US); WERT, Chad, Carlisle 17013 (US); LIANG, Ying, Carlisle 17013 (US); LEHIGH, Joshua, Carlisle 17013 (US); LEATHERMAN, Matthew, Carlisle 17013 (US)
(74) Representative: Mewburn Ellis LLP

(56) References cited:
- WO-A1-2018/005724
- JP-A- 2006 274 681
- US-A1- 2006 292 945
- US-A1- 2016 207 278

## Description

### Technical Field:

The present invention relates to induction welding of roofing membranes onto anchor plates mounted below.

### Background of the Invention:

Roofing membranes (such as TPO, EPDM and PVC membranes) have been attached onto building roofs using different methods. In one common approach, the edges of one side of the membranes are attached to the insulation and roof deck underneath using mechanical fasteners. The other edge of the membrane is joined to the next membrane which has been fastened down to form a monolith waterproofing system. This is usually called mechanically fasten roofing system. In other approaches, the entire membrane is attached to the insulation boards below via adhesive. In some cases, in order to further increase the wind uplift resistance, one edge of membranes are fastened down to the insulation board underneath. This is usually called fully adhered roofing system.

In the mechanically fastened roofing system, the entire membrane width is loosely laid on top of the insulation board except the two edges (one edge is fastened down directly to the insulation board below and the other edge is welded to the next membrane whose edge is fastened down). This is in contrast to the fully adhered system in which the entire membrane is attached to the insulation board below. As a result, the wind uplifting performance of the mechanically fastened system is significantly worse than that of the fully adhered system.

To enhance the wind uplifting performance of a mechanically fastened roofing system, additional attachment points to the insulation board underneath can be created via induction welding multiple points of membrane to the anchor plates that fastened down the insulation boards. In this approach, special anchor plates are used with a thin layer of hot-melt adhesive coated on the surface of the anchor plates. The Rhino Bond^{®} system sold by OMG, Inc. of Agawam, MA provides such as system, and is described in detail in US Patents 10,925,124 and 8,492,683. The IsoWeld^{®} system sold by SFS Holdings of Heerbrugg, Switzerland also provides a system as described in detail in their patents 10,474,126 and 9,328,515. In these various induction welding systems, mechanical fasteners (called "anchor plates") are first attached across the roof in an array formation. Next, a TPO membrane (or other suitable membrane) is laid over the anchor plates. Next, the TPO membrane is induction welded to the anchor plates using a magnetic induction heating system. To locate these anchor plates below the TPO membrane, an operator passes a stand-up induction welding tool over the TPO membrane. This tool has sensor coils that detect the presence of the anchor plates below the membrane. After an anchor plate has been detected, the tool then uses magnetic induction to heat the heat-activated adhesive that covers the top of each anchor plate. When heated, the anchor plate's adhesive then becomes thermally welded to the bottom of the TPO membrane, thereby securing the TPO roofing membrane onto the roof.

It is important to design induction welding systems that cope with the problem of high winds. For example, higher winds will exert greater forces on the roofing membrane, possibly causing it to pull up and separate from the adhesives covering the tops of the anchor plates. In this situation, one solution has been to attempt to make the adhesive on the anchor plate stronger.

Roofing membranes (such as standard TPO roofing membranes) have top and bottom TPO layers that are separated by a middle scrim layer. The scrim layer is necessary to give the membrane its overall strength and toughness on the roof. The middle scrim layer also gives the membrane puncture resistance, and makes the overall membrane stronger in tension. When the membrane is first formed, the bonding between the central scrim and top and bottom layers is rather weak. The adhesion strength between the top and bottom layer mostly comes from the bonding of top and bottom layers together through the holes in the scrim layer itself.

Unfortunately, another problem that also occurs during high winds has been that the roofing membrane itself tends to tear apart. This occurs because the presence of the scrim layer between the top and bottom membrane layers can prevent the top and bottom layers from bonding together. This is because the scrim layer does not have strong adhesion to top and bottom layer and the top and bottom layers are simply melted together through the holes in the scrim layer. When the scrim fibers are spaced far apart such that there are large apertures therebetween, there is more contacting surface area between the top and bottom layers. Conversely, when the scrim fibers are closer together (and take up more of the total surface area between the top and bottom layers), then there is less available contacting surface between the top and bottom layers, and they are not able to be bonded together as strongly. Weak bonding between the top and bottom layers of the membrane can affect the performance of the membrane under high wind loads. Specifically, as stated above, the membrane may fail by the top and bottom layers separating from one another.

Manufacturing a membrane that does not tear apart at the scrim layer will enable the roof to perform acceptably under higher winds, thus increasing the wind rating for the roof. It is therefore desirable to find a membrane solution that provides a sufficiently strong middle scrim layer in the membrane (as is required for proper roof performance), yet does not significantly compromise the connection strength between the top and bottom layers of the membrane when bonded together though the holes in the scrim layer.

JP 2006 274681 A relates to a method of fixing a waterproof sheet using metal plates, thermoplastic resin and induction heating.

WO 2018/005724 A1 relates to a temperature sensing induction heating roll.

US 2006/292945 A1 relates to a reduced scrim for a single ply roofing membrane.

US 2016/207278 A1 relates to a scrim layer.

### Summary of the Invention:

The present invention provides a method of induction welding a roofing membrane onto a roof deck, as defined by claim 1. Magnetic weights may be used to hold the membrane to the plate until the adhesive cools and solidifies. The present invention also provides a roofing assembly system as defined by claim 2.

A low density scrim is used in the present system. As defined herein, a low density scrim has five or less strands per 2.54 cm (1 inch); a medium density scrim has five to eight strands per 2.54 cm (1 inch) and a high density scrim has more than nine strands per 2.54 cm (1 inch). As scrims commonly have different numbers of strands per 2.54 cm (1 inch) in their machine and cross directions, a density of "X number of strands per 2.54 cm (1 inch)" as used herein refers to a scrim having a density of X strands per 2.54 cm (1 inch) averaged between its machine and cross direction densities.

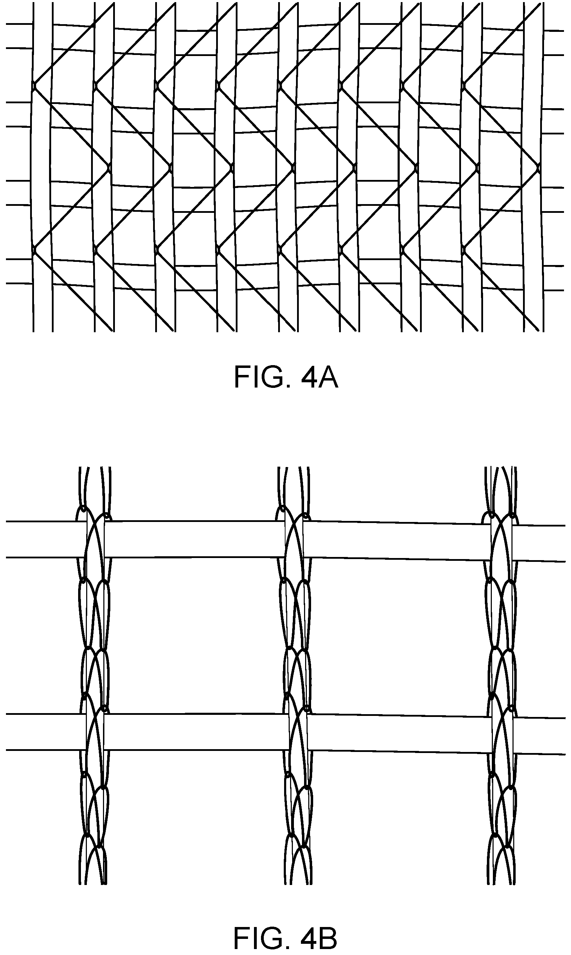

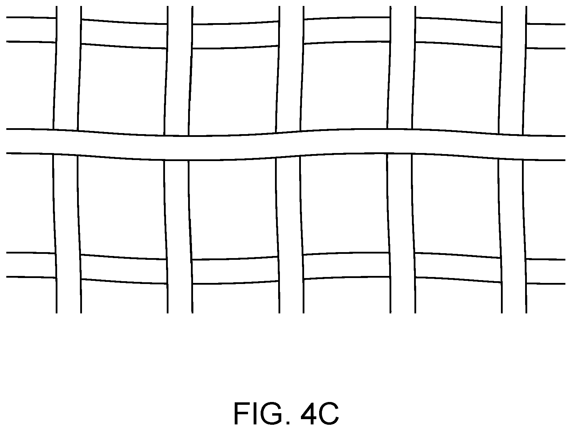

There are different types of scrim used in the single ply roofing membrane for reinforcement. One type is produced via weft insertion warp knit machine. Weft refers to cross machine direction while warp refers to machine direction. The weft and warp yarns are knitted together with tie yarns. There are different knit patterns available for this type of scrim. Not to be restricted by the illustrations. Figure 4A shows Z-type knit pattern. Figure 4B shows I-type or pillar type knit pattern. These scrims can be used to reinforce the roofing membranes as is or they can be optionally coated with different polymers to achieve additional properties. Another type of scrim is laid scrim. For this type of scrim, the weft and warp yarns are bound together using a polymer coating. An example of such scrim is shown in Figure 4C. In some arrangements of this disclosure, not all of which are within the scope of the present invention, the present low to medium density scrim layer has a fiber density between 3x3 and 8x8 strands of yarn per 2.54 cm (1 inch), or about 4.5x4.5 to 8x6 strands of yarn per 2.54 cm (1 inch). 6x6 strands of yarn per 2.54 cm (1 inch) is one possible density. Stated another way as defined herein, a low to medium density scrim covers less than 40% and more preferably less than 35% of the contact area between the top and bottom layers.

The present inventors have experimentally determined that the above ranges of low to medium scrim fiber density offer surprising benefits as the density is high enough for the membrane to perform acceptably on the roof (in terms of strength, toughness and puncture resistance), yet low enough such that the top and bottom layers of the membrane have a large enough contact surface to bond together through the openings in the scrim layer.

In preferred aspects, the warp and weft yarns have yarn weight of 1,000 to 2,500 deniers. Yarn denier is a measure of the linear mass of the fibers in scrim. Denier is a unit used for the weight of 9,000 meters of filament yarn. Typically, 1,000 or 1,300 denier yarns are used as warp or weft yarns in the scrim for the roof applications. It is possible that when low to medium scrim fiber density is used, a higher denier yarns may need to achieve acceptable performance (in terms of strength, toughness and puncture resistance). In most preferred aspects, the warp and weft yarns have yarn weight of 1,300 to 2,000 deniers.

In preferred aspects, the scrim layer is made of PET (polyethylene terephthalate), and the top and bottom layers of the membrane are made of one of: TPO (thermoplastic polyolefin), EPDM (ethylene propylene diene monomer) or PVC (polyvinyl chloride). It is to be understood that other suitable materials may be used as well for the scrim and membrane layers, all keeping within the scope of the present invention.

In most preferred aspects, the low density scrim has a knit pattern where the tie yarn does not knit two warp yarns to tie together with weft yarns. Instead, the tie yarn knit along one warp yarn and tie together with weft yarns in a knit pattern called I-knit or pillar-knit. Both knit and laid scrim, knit scrims of different fiber density, and knit scrims of different knit patterns have been experimentally determined by the present inventors to have sufficiently large apertures to provide a large enough contact surface to bond together through the opening in the scrim layer to provide good wind uplifting performance.

The present disclosure provides a roofing membrane suitable for induction welding, comprising: a top layer; a bottom layer; and a low to medium density scrim layer between the top and bottom layers, wherein the scrim has a fiber density of 8 or less strands per 2.54 cm (1 inch), such as between 3x3 and 8x8 strands of yarn per 2.54 cm (1 inch), or most preferably about 4.5x4.5 to 8x6 strands of yarn per 2.54 cm (1 inch). In one arrangement, a 6x6 scrim can be used. The preferred yarn weight is 1,000 to 2,500 denier. In various arrangements, the most preferred is 1,300 to 2,000 denier. In one preferred arrangement, 1,500 denier yarns can be used.

### Brief Description of the Drawings:

Fig. 1 is an illustration of a layered TPO membrane.
Fig. 2A is a sectional perspective illustration of a traditional mechanically fastened TPO membrane installed on a roof.
Fig. 2B is a sectional perspective illustration of a traditional fully adhered TPO membrane installed on a roof.
Fig. 3 is a sectional side elevation view showing fasteners and induction welding plates securing a TPO membrane onto insulation boards below. An induction welding machine is positioned over one of the induction welding plates.
Fig. 4A is an illustration of an industry-standard scrim layer showing a common Z-knit pattern.
Fig. 4B is an illustration of a preferred low to medium density scrim layer having an I-knit or Pillar-knit pattern in accordance with the present disclosure.
Fig. 4C is an illustration of a preferred low to medium density scrim laid scrim.
Fig. 5 is a sectional side elevation view of a membrane induction welded onto an anchor plate.
Fig. 6 is a side elevation view of the system of Fig. 5, corresponding to failure in which the top and bottom layers have separated at the scrim layer.
Fig. 7A is a side elevation view of the system of Fig. 5, corresponding to a failure where a hole is ripped through the membrane.
Fig. 7B is a downwardly looking view of an anchor plate of Fig. 7A showing scrim layer breakage at wind test failure, with a portion of the membrane covering the top of the anchor plate.
Fig. 7C is an upwardly looking view of the bottom of the membrane corresponding to Fig. 7A, showing a hole cut through the membrane.
Fig. 8A is a side elevation view of the system of Fig. 5A, corresponding to a failure where a ring shaped portion of the top and bottom layers have separated at the scrim layer.
Fig. 8B is a downwardly looking view of an anchor plate showing portions of the scrim layer of the membrane thereon at wind test failure.
Fig. 8C is an upwardly looking view of the bottom of the membrane corresponding to Fig. 8A showing a ring of the lower layer removed with the scrim and upper layer remaining.

### Detailed Description of the Drawings:

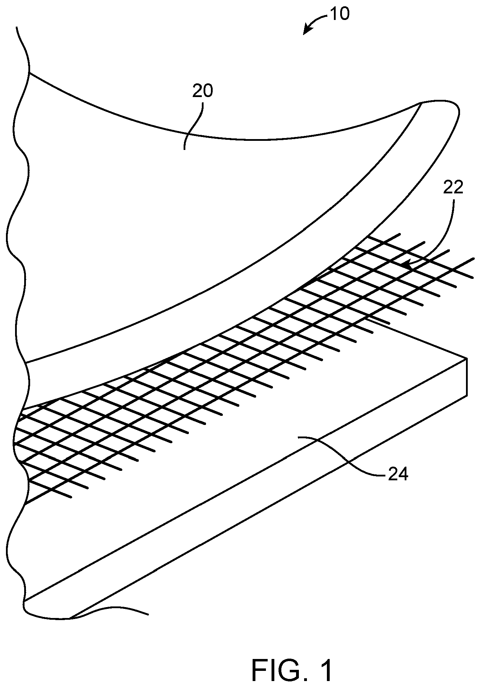

Fig. 1 is an illustration of a standard layered TPO membrane 10. (It is to be understood that this illustration pertains to other materials as well as TPO, including, but not limited to EPDM and PVC). As can be seen, a standard TPO membrane 10 comprises a top ply layer 20 and a bottom ply layer 24 preferably separated by a reinforced scrim 22. Industry-standard TPO roofing membranes like membrane 10 typically have a top TPO layer 22 that is structure 508-1270 micrometres (20 - 50 mils) thick, a reinforcing polyester scrim fabric 22 that is 50.8-508 micrometers (2-20 mils) thick depending on location of the yarns, and a bottom TPO layer 24 that is 508-1270 micrometres (20-50 mils) thick. Most industry-standard TPO membranes are provided in rolls with a width of 1.829-3.658 metres (6-12 feet). Recently, however, 4.877 metre (16 foot) wide TPO roofing membranes have been introduced into the marketplace. TPO sheets are typically sold and transported to the jobsite in rolls. During the roof installation, several sheets are unrolled at the installation site and placed next to one another covering the roof. Finally, their overlapping edge seams are joined together using a heat welding process to form a monolithic sheet that covers the roof.

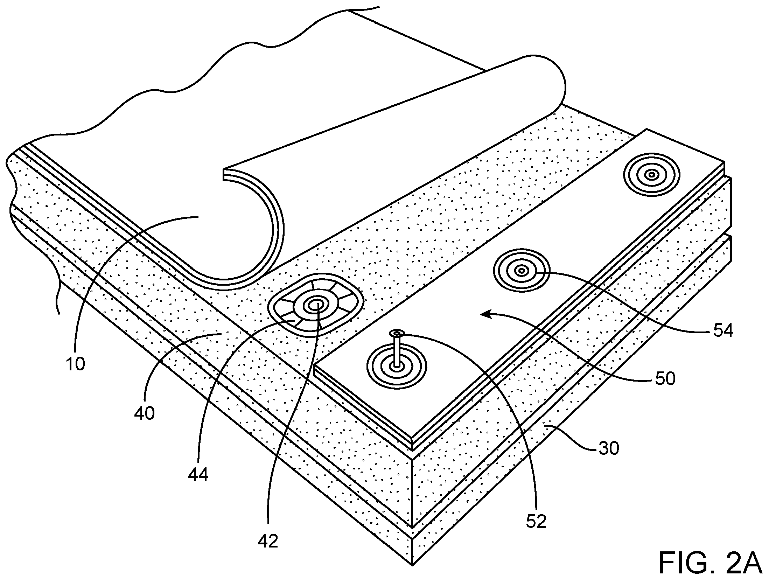

Fig. 2A is an illustration of a traditional "mechanically fastened" TPO membrane 10 installed onto the roof. In this illustration, the insulation block 40 is first secured down to the roof deck 30 by fasteners 42 which hold plates 44. After the insulation block 40 has been attached onto roof deck 30, an edge 50 (of a first TPO membrane) is positioned on the insulation block 40, as shown. Membrane fasteners 52 are used to pass through the edge 50 of the TPO membrane, and holding plates 54 are used to secure the edge 50 of the first membrane down into position on the roof. Next, the edge of the second TPO membrane 10 is then placed down to cover edge 50 of the first TPO membrane. Next, the edge of membrane 10 is welded onto edge 50 to the right side of fasteners 52 and plates 54. Typically, the edge of 50 to the weld line is around 15.24 cm (6 inches) (to provide some overlap of the membrane edges). As can be appreciated, the biggest weakness with this approach is that the TPO membranes are only secured to the insulation block on two edges while the entire span of the sheet width is loosely on top of the insulation block without physical attachment. Unfortunately, this approach does not perform well during high winds due to the limited number of attachment points (at 52, 54) holding the TPO membrane 10 onto the roof.

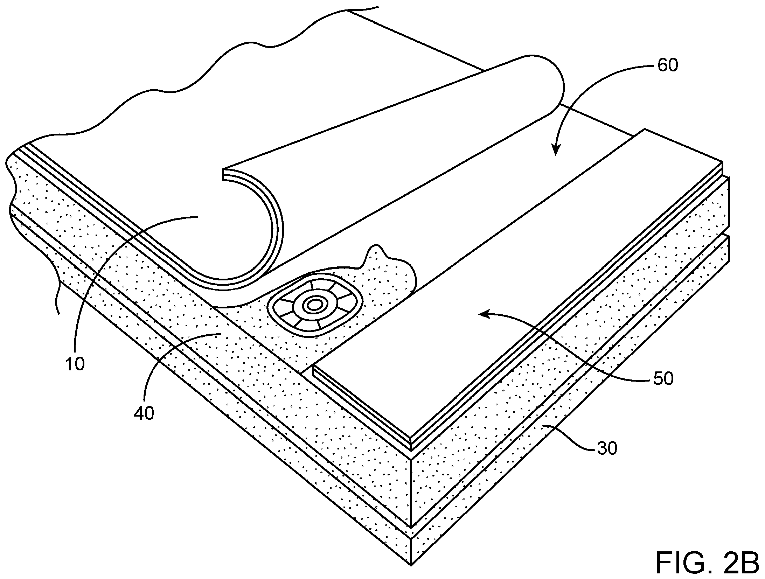

Fig. 2B is an illustration of a traditional "fully adhered" TPO membrane installed on a roof. This is a somewhat different approach from Fig. 2A. In the approach of Fig. 2B, a bonding adhesive 60 is spread under TPO membrane 10 and is used to adhere TPO membrane 10 onto the top of insulation block 40. The edge 50 of a first TPO membrane can be seen. This first membrane has already been secured to the insulation block by bonding adhesive. Finally, the edge of the TPO membrane 10 is flipped down onto edge 50 of the first TPO membrane. The overlapping edges of the two TPO membranes are then welded or adhered together. Optionally, fasteners can be uses as well to secure these overlapping edges together. This "fully adhered" approach has the benefit of adhesion across the entire bottom surface of TPO membrane 10 securing it to the insulation layer below. Unfortunately fully adhered systems are time consuming to install and in general significant more expensive than the mechanically fastened systems.

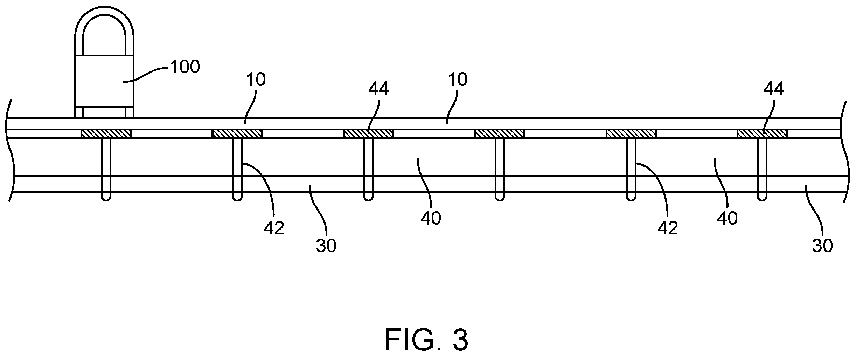

Instead, a system is desired in which strong mechanical fastening systems can be used. An example of such a system is seen in Fig. 3 which is a sectional side elevation view showing fasteners 42 and induction welding plates 44 securing the TPO membrane 10 onto insulation boards 40 below. Optionally fasteners 42 and induction welding plates 44 secure the TPO membrane 10 onto insulation boards 40 and roofing deck 30 below. In this system, an array of anchor plates 44 are mechanically attached across the roof deck. Each anchor plate 44 is nailed in position by fastener 42. The top surface of each anchor plate 44 is covered with a heat activated adhesive. TPO membrane 10 is then placed over the array of anchor plates 44. Advantageously, no punctures need to be made through TPO membrane 10.

After the TPO membrane 10 has been unrolled and spread over the array of anchor plates 44, an operator-controlled standing induction welding machine 100 is passed over the top of TPO membrane 10. This induction welding machine 100 has sensor coils in it that detect when it is positioned directly over each anchor plate 44. When machine 100 is in its correct position over an anchor plate 44, a magnetic induction field is applied to the anchor plate. This magnetic induction field heats the anchor plate and thus causes the adhesive on the top surface of the anchor plate to melt and bond to the bottom surface of TPO membrane 10. Heavy magnets can then be temporarily placed on top of the induction welding locations to hold TPO membrane 10 onto anchor plate 44 as the adhesive solidifies. As such, induction welding is similar to normal in-seam mechanical fastening, but with the added advantage of more anchoring points in the middle of the TPO membrane. This helps the TPO membrane better withstand high wind loading.

In short, Fig. 3 schematically illustrates a roof deck 30 having an insulation block or layer 40 thereon. The insulation block 40 has a fastener 42 passing therethrough. Fastener 42 is secured to roof deck 30 and holds anchor plate 44 down on top of insulation block 40. Anchor plate 44 has a hot-melt adhesive covering its top surface. The TPO roofing membrane 10 is secured down onto the top of anchor plate 44 when the adhesive covering the top of anchor plate 44 is melted by an induction welding machine passing thereover. Common systems for performing such induction welding include the IsoWeld^{®} and RhinoBond^{®} induction plate welding systems.

The important advantage of the present system as compared to traditional IsoWeld^{®} or RhinoBond^{®} induction plate welding systems is that the present system specifically includes a unique and newly designed low density scrim layer 22 for use in its proprietary TPO membrane 10. The Applicant has experimentally determined that this newly devised low density scrim layer 22 offers surprising and unexpected benefits when working with anchor plate induction welding systems.

Specifically, a higher-density scrim layer has been typically used in the industry in the TPO membrane to provide a membrane having sufficient strength and toughness suitable for roofing applications. The present inventors have instead experimentally determined that having a scrim layer with larger apertures (i.e.: a much lower fiber density) provides a greater contact area between the top and bottom layers of the membrane for bonding these layers together. By providing a membrane with stronger bonding between its top and bottom layers, the present TPO membrane 10 is far less likely to separate (i.e. be pulled apart with its top and bottom layers separating) at high wind loading. Simply put, the present inventors have found a preferred low density range of scrim fibers that is high enough to provide sufficient strength, yet low enough to provide strong bonding between the top and bottom layers of the membrane. The specific range of scrim density described and claimed herein thus offers unexpected benefits and performance.

Currently most of the reinforcing scrims in the roofing membrane industry are 9x9 1000x1000 denier, 9x8, 1000x1300 denier or 9x9 1300x1300 denier (9x9 scrim represents 9 ends of PET fiber per 2.54 cm (1 inch)). Unfortunately, the Applicant has experimentally determined that this density of scrim construction significantly blocks the interaction of the top and bottom layers 22 and 24 of the roofing membrane. In the present system, it was discovered that the induction welding performance can be significantly increased when the openings in the scrim layer 22 are increased in size. For example, by changing from the industry standard 9x9 density scrim to a lower density, e.g. a 4.5x4.5 scrim, the wind uplift rating can be increased. There are wind uplifting ratings that are desired for each of: seam welded roofing systems, induction welded roofing systems, and fully adhered roofing systems. In each type of system, the weakest point and failure modes are all different. The present system of opening up (i.e.: providing larger) scrim holes makes the weakest link in the induction welding roof system stronger, thereby achieving a better wind uplifting rating.

When the Applicant performed the induction welding wind uplift testing, a sample of TPO membrane was placed on top of the wind uplift testing table with dimensions of 3.658 m (12') by 7.315 m (24'). These membrane dimensions can vary depending on the specific test, but typically the membrane seams can run lengthwise (7.315 m (24')) or widthwise (3.658 m (12')) on the table. During these tests, RhinoBond^{®} plates were attached to the underside of the membrane through induction welding and can be organized in a grid layout or in rows depending on the desired outputs, specifically, attachment pattern of 152.4 cm x45.72 cm (5'x18") were used, i.e. row spacing of 152.4 cm (5 feet (60 inches)) are used with fastener spacing of 45.72 cm (18 inches) on center. The plate and fasteners were secured to the insulation and existing roof assembly. The testing started at a pressure of 1.4 kPa (30 psf) and the pressure was held constant for one minute. If there is no failure within that minute, the pressure was then increased in 0.7 kPa (15 psf) increments, with each consecutive pressure held for a minute each. The last pressure level the membrane passes for a minute without failing was designated as the wind uplift rating.

Table 1 below set forth partial details of the experiments performed by the present inventors. It can be seen that the low to medium density scrims (4.5 x4.5 and 4.5 x 6) avoided ply to ply delamination (i.e.: separation of the top and bottom layers under wind loading):

**TABLE 1:**

| | **Ref. 1** | **Ref. Sample 1** | **Ref. Sample 2** | **Ref. Sample 3** | **Sample 4** | **Ref. Sample 5** |
|---|---|---|---|---|---|---|
| **Machine direction Fiber density, ends per 2.54 cm (ends per inch)** | 9 | 9 | 9 | 8 | 4.5 | 4.5 |
| **Cross direction Fiber density, ends per 2.54 cm (ends per inch)** | 8 | 8 | 9 | 8 | 4.5 | 6 |
| **Machine direction Fiber Weight (denier)** | 1000 | 1000 | 1300 | 1300 | 1000 | 1300 |
| **Cross direction Fiber Weight (denier)** | 1300 | 1300 | 1300 | 1300 | 1000 | 1300 |
| **Estimated % area occupied by fiber** | 43% | 37% | 62% | 38% | 19% | 27% |
| **Estimated % area available to bond** | 57% | 63% | 38% | 62% | 81% | 73% |
| **Weft Inserted Warp Knit (WIWK)** | Yes | No | Yes | Yes | Yes | Yes |
| **Pillar WIWK** | No | N/A | Yes | No | Yes | No |
| **Total membrane thickness, mm (mil)** | 1.524 (60) | 1.524 (60) | 1.524 (60) | 1.524 (60) | 1.524 (60) | 1.524 (60) |
| **Wind uplift rating** | 1-60 | 1-75 | 1-45 | 1-75 | 1-75 | 1-90 |
| **Failure mode** | Ply to ply delamination | Ply to ply delamination | Ply to ply delamination | Ply to ply delamination | Scrim break | Scrim break |

In preferred aspects, the present system provides a low density scrim layer between the top and bottom layers, wherein the scrim has a low fiber density of five or less strands per 2.54 cm (1 inch). A medium fiber density of five to eight strands per 2.54 cm (1 inch) is also disclosed. In some arrangements, not all of which are within the scope of the present invention, the present system uses a fiber density of between 3x3 and 8x8 strands of yarn per 2.54 cm (1 inch), or a fiber density of 4.5x4.5 to 8x6 strands of yarn per 2.54 cm (1 inch). Stated another way, in preferred aspects, the low density scrim covers less than 40% and more preferably less than 35% of the contact area between the top and bottom layers. In preferred aspects, the present system can achieve a wind uplift rating of 1-105 and above when high yarn weight is used in combination with a low density scrim.

Fig. 4A is an illustration of a common high density scrim layer and Fig. 4B is an illustration of a preferred low to medium density scrim layer in accordance with the present disclosure. The present inventors have experimentally determined that knit patterns that can further change open contact space between the top and bottom layers of the membrane to be most suitable. Fig. 4A shows a typical industry-standard higher density scrim in which diagonal tie yarns are seen wrapping around successive pairs of strands in Fig. 4A. In contrast, Fig. 4B shows a knit known as an I-knit or Pillar-knit. In Fig. 4B, the tie yarn is instead wrapped around the warp strands themselves and tie weft and warp strands together in the scrim (i.e.: they are wrapped around the vertical strands in Fig. 4B). Fig. 4C shows a laid scrim where weft and warp strands are held together by polymer coating. Fig. 4B and Fig. 4C thus provides considerably more open space for bonding of the top and bottom layers together (as compared to Fig. 4A). Thus, the knit pattern embodiment of Fig. 4B and Fig. 4C provides improved bonding between the top and bottom layers of the membrane (as compared to Fig. 4A). Note: in Table 1 above, Ref. Sample 2 and Sample 4 correspond to the scrim embodiment seen in Fig. 4B, Ref. Samples 1 corresponds to the scrim embodiment seen in Fig. 4C, and Reference 1 and Ref. samples 3 and 5 correspond to the scrim embodiment seen in Fig. 4A. Importantly, however, it is to be understood that in the present system, scrim density rather than scrim knit patterns is most important in achieving the desired results.

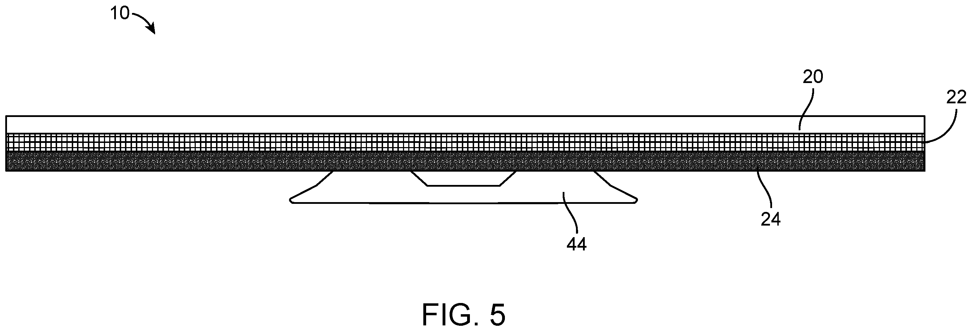

Fig. 5 is a sectional side elevation view of a TPO membrane 10 induction welded to the top of an anchor plate 44 showing the top TPO layer 20, the middle scrim layer 22 and the bottom layer 24.

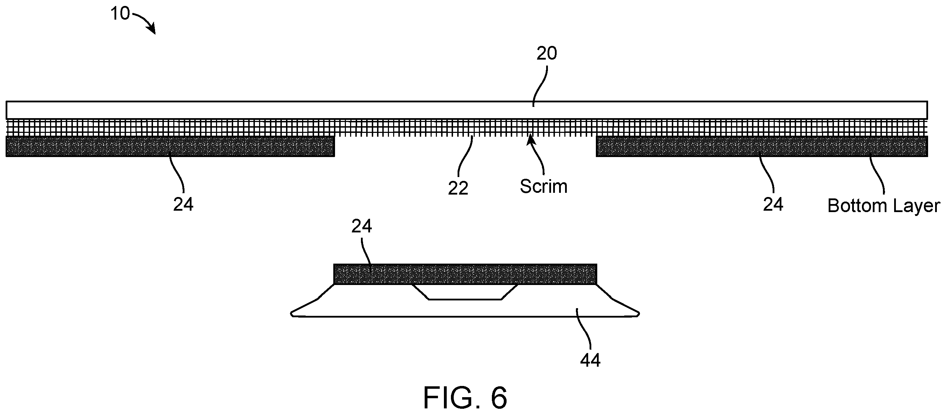

Fig. 6 is a side elevation view of the system of Fig. 5, corresponding to failure in which the top and bottom layers 22 and 24 have separated at the scrim layer 22. As can be seen, a portion of bottom TPO layer 24 remains on top of anchor plate 44 at failure (i.e.: when TPO membrane 10 has been ripped off the roof during high winds).

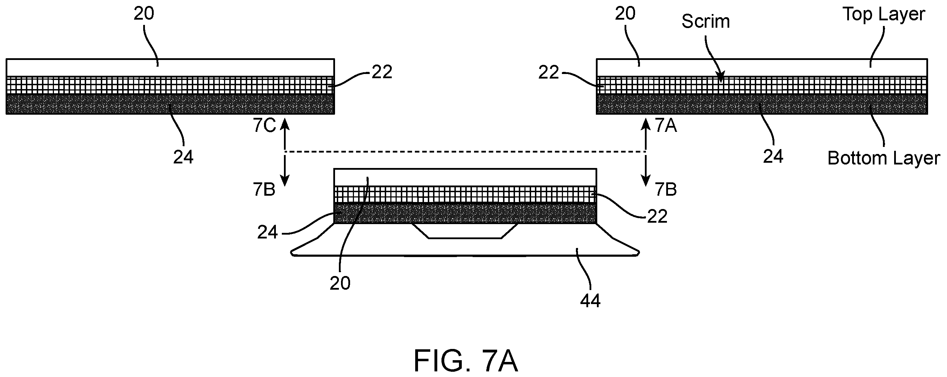

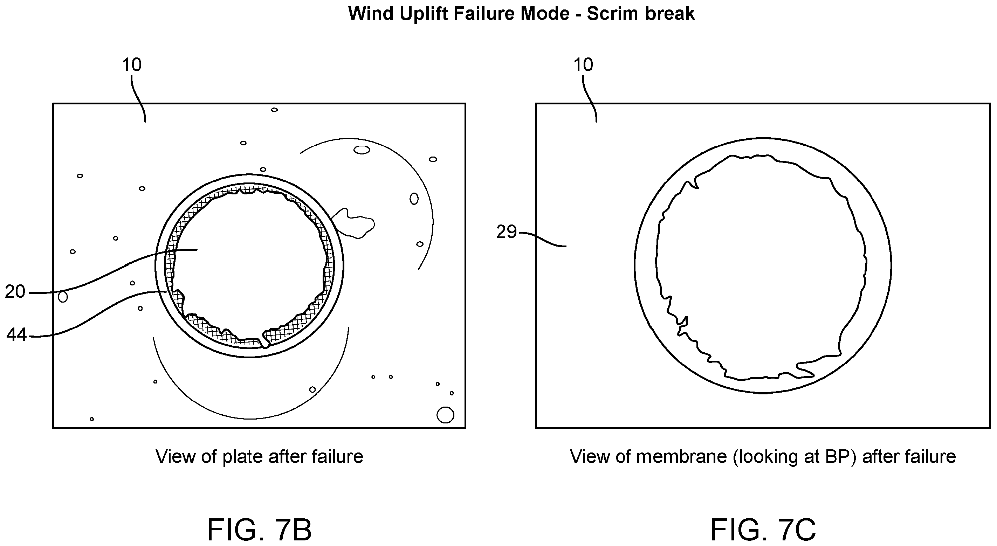

Fig. 7A is a side elevation view of the system of Fig. 5, corresponding to a failure where a hole is ripped right through the membrane. Fig. 7B is a downwardly looking view (taken along line 7B-7B) of the anchor plate 44 of Fig. 7A showing scrim layer breakage at wind test failure, with the top layer 20 of a portion of the membrane 10 still covering the top of anchor plate 44. Fig. 7C is an upwardly looking view (taken along line 7C-7C) of the bottom layer 24 of the membrane 10 corresponding to Fig. 7A, showing a circular hole cut right through the membrane.

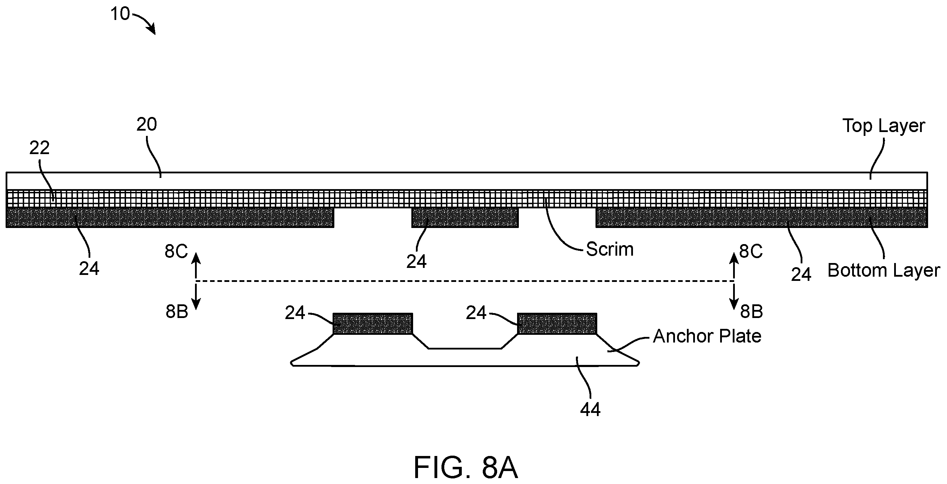

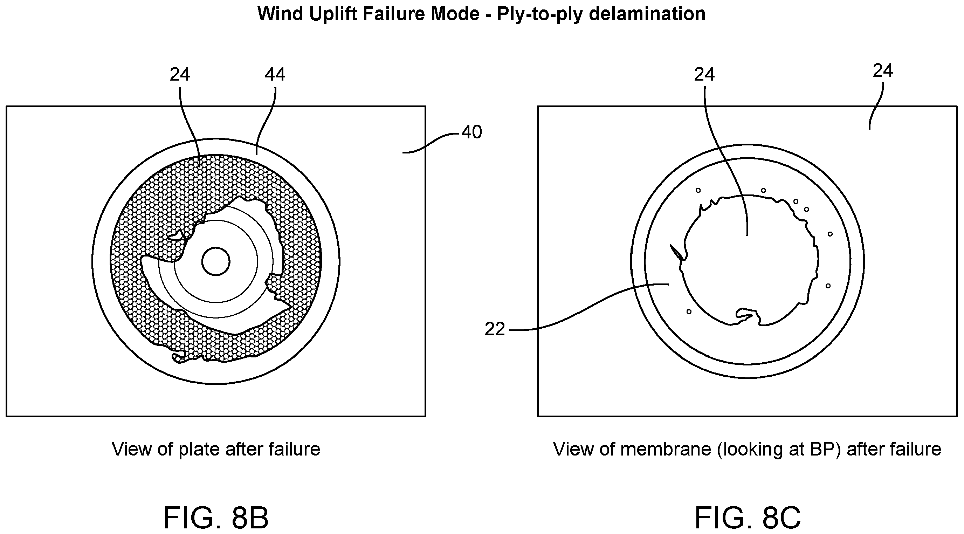

Fig. 8A is a side elevation view of the system of Fig. 5, corresponding to a failure where a ring shaped portion of the top and bottom layers 20 and 24 have separated at scrim layer 22. Fig. 8B is a downwardly looking view (taken along line 8B-8B) of an anchor plate 44 showing portions of the bottom layer 24 and scrim layer 22 of the membrane thereon at wind test failure. (The bottom layer 24 on the anchor plate is hidden by scrim layer 22 sitting on top of it). Lastly, Fig. 8C is an upwardly looking view (taken along line 8C-8C) of the bottom of the membrane corresponding to Fig. 8A showing a ring of the lower layer 24 removed with the scrim 22 exposed.

## Claims

1. A method of induction welding a roofing membrane (10) onto a roof deck (30), comprising:
(a) placing an insulation layer (40) onto the roof deck (30);
(b) securing roofing anchor plates (44) onto the insulation layer, wherein the roofing anchor plates are covered with a hot-melt adhesive, and wherein the roofing anchor plates (44) are metallic;
(c) placing the roofing membrane (10) over the roofing anchor plates (44), wherein the roofing membrane (10) comprises:
a top layer (20),
a bottom layer (24), and
a scrim (22) between the top and bottom layers (20, 24), the scrim (22) having a fiber density of five or less strands per 2.54 cm (1 inch); and then
(d) applying induction heating to the roofing anchor plates (44) so as to cause the roofing anchor plates (44) to heat and melt the adhesive such that the adhesive secures the bottom layer (24) to the roofing anchor plates (44).

2. A roofing assembly system comprising:
a roof deck (30);
an insulation layer (40) on the roof deck (30);
a plurality of metallic roofing anchor plates (44) suitable for induction welding on top of the insulation layer (40); and
a roofing membrane (10) suitable for induction welding on top of the insulation layer (40), comprising:
a top layer (20);
a bottom layer (24); and
a scrim (22) between the top and bottom layers (20, 24), the scrim (22) having a fiber density of five or less strands per 2.54 cm (1 inch),
wherein hot-melt adhesive secures the bottom layer (24) of the roofing membrane (10) to the roofing anchor plates (44).

3. The method of claim 1 or the roofing assembly system of claim 2, wherein the scrim (22) has a fiber density between 3x3 and 5x5 strands of yarn per 2.54 cm (1 inch).

4. The method of claim 1 or the roofing assembly system of claim 2, wherein the scrim (22) covers less than 40% of the contact area between the top and bottom layers (20, 24).

5. The method of claim 1 or the roofing assembly system of claim 2, wherein the scrim (22) is made of PET.

6. The method of claim 1 or the roofing assembly system of claim 2, wherein the top and bottom layers (20, 24) are made of one of:
TPO, EPDM or PVC.

7. The method of claim 1 or the roofing assembly system of claim 2, wherein the scrim (22) is knitted.

8. The method of claim 1 or the roofing assembly system of claim 2, wherein the scrim (22) is a laid scrim.

9. The method of claim 7 or the roofing assembly system of claim 7, wherein the scrim (22) is knitted as a Weft Inserted Warp Knit, an I-knit or Pillar-knit.

10. The method of claim 1 or the roofing assembly system of claim 2, wherein the yarn weight of the scrim (22) is 1,000 to 2,500 denier.

11. The method of claim 1 or the roofing assembly system of claim 2, wherein the yarn weight of the scrim (22) is 1,300 to 2,000 denier.

12. The method of claim 1 or the roofing assembly system of claim 2, wherein the yarn weight of the scrim (22) is 1,500 denier.

## Patentansprüche

1. Verfahren zum Induktionsschweißen einer Dachmembran (10) auf eine Dachschalung (30), umfassend:
(a) Platzieren einer Isolierschicht (40) auf der Dachschalung (30);
(b) Festlegen von Dach-Ankerplatten (44) auf der Isolierschicht, wobei die Dach-Ankerplatten mit einem Heißschmelzhaftmittel bedeckt sind und wobei die Dach-Ankerplatten (44) metallisch sind;
(c) Platzieren der Dachmembran (10) über den Dach-Ankerplatten (44), wobei die Dachmembran (10) Folgendes umfasst:
eine obere Schicht (20),
eine untere Schicht (24) und
ein Gittergewebe (22) zwischen der oberen und der unteren Schicht (20, 24), wobei das Gittergewebe (22) eine Faserdichte von fünf oder weniger Fäden pro 2,54 cm (1 Zoll) aufweist; und anschließend
(d) Beaufschlagen von Induktionserhitzen auf die Dach-Ankerplatten (44) derart, dass ein Erhitzen der Dach-Ankerplatten (44) ein Erhitzen und Schmelzen des Haftmittels bewirkt, sodass das Haftmittel die untere Schicht (24) auf den Dach-Ankerplatten (44) festlegt.

2. Dachanordnungssystem, umfassend:
eine Dachschalung (30);
eine Isolierschicht (40) auf der Dachschalung (30);
eine Vielzahl von metallischen Dach-Ankerplatten (44), die zum Induktionsschweißen auf der Oberseite der Isolierschicht (40) geeignet sind; und
eine Dachmembran (10), die zum Induktionsschweißen auf der Oberseite der Isolierschicht (40) geeignet ist, umfassend:
eine obere Schicht (20),
eine untere Schicht (24) und
ein Gittergewebe (22) zwischen der oberen und der unteren Schicht (20, 24), wobei das Gittergewebe (22) eine Faserdichte von fünf oder weniger Fäden pro 2,54 cm (1 Zoll) aufweist,
wobei Heißschmelzhaftmittel die untere Schicht (24) der Dachmembran (10) auf den Dach-Ankerplatten (44) festlegt.

3. Verfahren nach Anspruch 1 oder Dachanordnungssystem nach Anspruch 2, wobei das Gittergewebe (22) eine Faserdichte zwischen 3x3 und 5x5 Fäden Garn pro 2,54 cm (1 Zoll) aufweist.

4. Verfahren nach Anspruch 1 oder Dachanordnungssystem nach Anspruch 2, wobei das Gittergewebe (22) weniger als 40 % der Kontaktfläche zwischen der oberen und der unteren Schicht (20, 24) bedeckt.

5. Verfahren nach Anspruch 1 oder Dachanordnungssystem nach Anspruch 2, wobei das Gittergewebe (22) aus PET besteht.

6. Verfahren nach Anspruch 1 oder Dachanordnungssystem nach Anspruch 2, wobei die obere und untere Schicht (20, 24) aus einem aus folgenden bestehen:
TPO, EPDM oder PVC.

7. Verfahren nach Anspruch 1 oder Dachanordnungssystem nach Anspruch 2, wobei das Gittergewebe (22) gestrickt ist.

8. Verfahren nach Anspruch 1 oder Dachanordnungssystem nach Anspruch 2, wobei das Gittergewebe (22) ein Gelege ist.

9. Verfahren nach Anspruch 7 oder Dachanordnungssystem nach Anspruch 7, wobei das Gittergewebe (22) als ein schusseingetragenes Kettengewirk, ein I-Gewirk oder ein Säulengewirk gestrickt ist.

10. Verfahren nach Anspruch 1 oder Dachanordnungssystem nach Anspruch 2, wobei die Garnstärke des Gittergewebes (22) 1.000 bis 2.500 Denier beträgt.

11. Verfahren nach Anspruch 1 oder Dachanordnungssystem nach Anspruch 2, wobei die Garnstärke des Gittergewebes (22) 1.300 bis 2.000 Denier beträgt.

12. Verfahren nach Anspruch 1 oder Dachanordnungssystem nach Anspruch 2, wobei die Garnstärke des Gittergewebes (22) 1.500 Denier beträgt.

## Revendications

1. Procédé de soudage par induction d'une membrane de toiture (10) sur un platelage de toit (30), comprenant les étapes consistant à :
(a) placer une couche d'isolation (40) sur le platelage de toit (30) ;
(b) fixer des plaques d'ancrage de toiture (44) sur la couche d'isolation, dans lequel les plaques d'ancrage de toiture sont recouvertes d'un adhésif thermofusible, et dans lequel les plaques d'ancrage de toiture (44) sont métalliques ;
(c) placer la membrane de toiture (10) sur les plaques d'ancrage de toiture (44), dans lequel la membrane de toiture (10) comprend :
une couche supérieure (20), une couche inférieure (24), et
un canevas (22) entre les couches supérieure et inférieure (20, 24), le canevas (22) présentant une densité de fibres de cinq brins ou moins pour 2,54 cm (1 pouce) ; puis
(d) appliquer un chauffage par induction aux plaques d'ancrage de toiture (44) de manière à amener les plaques d'ancrage de toiture (44) à chauffer et à faire fondre l'adhésif de telle sorte que l'adhésif fixe la couche inférieure (24) aux plaques d'ancrage de toiture (44).

2. Système d'assemblage de toiture, comprenant :
un platelage de toit (30) ;
une couche d'isolation (40) sur le platelage de toit (30) ;
une pluralité de plaques d'ancrage de toiture métalliques (44) appropriées pour un soudage par induction sur le dessus de la couche d'isolation (40) ; et
une membrane de toiture (10) appropriée pour un soudage par induction sur le dessus de la couche d'isolation (40), comprenant :
une couche supérieure (20) ;
une couche inférieure (24) ; et
un canevas (22) entre les couches supérieure et inférieure (20, 24), le canevas (22) présentant une densité de fibres de cinq brins ou moins pour 2,54 cm (1 pouce),
dans lequel un adhésif thermofusible fixe la couche inférieure (24) de la membrane de toiture (10) aux plaques d'ancrage de toiture (44).

3. Procédé selon la revendication 1 ou système d'assemblage de toiture selon la revendication 2, dans lequel le canevas (22) présente une densité de fibres comprise entre 3x3 et 5x5 brins de fil pour 2,54 cm (1 pouce).

4. Procédé selon la revendication 1 ou système d'assemblage de toiture selon la revendication 2, dans lequel le canevas (22) recouvre moins de 40 % de la surface de contact entre les couches supérieure et inférieure (20, 24).

5. Procédé selon la revendication 1 ou système d'assemblage de toiture selon la revendication 2, dans lequel le canevas (22) est réalisé en PET.

6. Procédé selon la revendication 1 ou système d'assemblage de toiture selon la revendication 2, dans lequel les couches supérieure et inférieure (20, 24) sont constituées de l'un des éléments suivants : TPO, EPDM ou PVC.

7. Procédé selon la revendication 1 ou système d'assemblage de toiture selon la revendication 2, dans lequel le canevas (22) est tricoté.

8. Procédé selon la revendication 1 ou système d'assemblage de toiture selon la revendication 2, dans lequel le canevas (22) est un canevas tramé.

9. Procédé selon la revendication 7 ou système d'assemblage de toiture selon la revendication 7, dans lequel le canevas (22) est tricoté sous la forme d'un tricot chaîne à insertion de trame, d'un tricot en I ou d'un tricot à mailles piliers.

10. Procédé selon la revendication 1 ou système d'assemblage de toiture selon la revendication 2, dans lequel le poids de fil du canevas (22) est de 1 000 à 2 500 deniers.

11. Procédé selon la revendication 1 ou système d'assemblage de toiture selon la revendication 2, dans lequel le poids de fil du canevas (22) est de 1 300 à 2 000 deniers.

12. Procédé selon la revendication 1 ou système d'assemblage de toiture selon la revendication 2, dans lequel le poids de fil du canevas (22) est de 1 500 deniers.
